# EUROPÄISCHE PATENTANMELDUNG

(11) **EP 2 062 654 A1**
(43) Veröffentlichungstag der Anmeldung: **27.05.2009**
(21) Anmeldenummer: 08105622.8
(22) Anmeldetag: 21.10.2008
(51) Int. Cl.: B05B 7/24

(54) **Vorrichtung zum Sprühen von Markierungen auf Flächen**

(30) Priorität: 21.11.2007 DE 102007055502
(71) Anmelder: HILTI Aktiengesellschaft, 9494 Schaan (LI)
(72) Erfinder: Steiger, Thomas, 9450 Lüchingen (CH); Lippuner, Martin, 8304 Wallisellen (CH); Stöck, Maximilian, 9478 Azmoos (CH); Würsch, Christoph, 9470 Werdenberg (CH)

(57) **Zusammenfassung**

Eine an einer Fläche (1) entlang versetzbare Markiereinrichtung mit einer Markiervorrichtung (4) zur Aufbringung einer Markierflüssigkeit (5) aus einem Markierflüssigkeitsreservoir (6) auf die Fläche (1), die zumindest ein von einem Rechenmittel (7) steuerbares Ventil (8) und eine damit verbundene Düse (9) mit einer Düsenachse (D) enthält, wobei das Markierflüssigkeitsreservoir (6) ein in einem Stifthalter (10) einsetzbarer Schreibstift (11) mit einer Stiftachse (A) und mit einer porösen Schreibspitze (12) ist, der die Düse (9) benachbart zugeordnet ist, die über das Ventil (8) mit einem gasförmigen Druckmedium (13) verbunden ist.

## Beschreibung

Die Erfindung bezeichnet eine an einer Fläche entlang versetzbare Markiereinrichtung zur Anbringung dauerhaft sichtbarer Markierungen auf dieser Fläche, insbesondere auf Wänden, Decken, Böden aus Beton, Mauerwerk, Holz, Fliesen, Porenbeton, Kalksandstein, Putz, Tapeten usw. im Bauhauptgewerbe und Bauhilfsgewerbe.

Üblicherweise werden im Baugewerbe die Markierungen auf Flächen mit Kreidestiften, Sprays, Spickschnüren, Bleistiften, Filzstiften etc. angebracht. Dies ist für den seltenen Einzelfall durchaus geeignet, nicht jedoch für automatisierte Abläufe für eine Vielzahl von Markierungen.

Oft werden derartige Markiereinrichtungen mit positionsabhängigen Detektoren kombiniert, welche im Detektionsereignisfall mittels einer Markiervorrichtung automatisch eine Markierung auf der Fläche anbringen, bspw. bei der Detektion von in der Wand eingebetteten Eisenarmierungen oder Rohrleitungen, oder bei der Detektion des Laserstrahls eines Rotationslasers zur Markierung von exakt positionierten Befestigungspunkten.

Nach der US6373244 weist eine manuell geführte und auf Rädern an der Fläche entlang verfahrbare Markiereinrichtung einen positionsabhängigen Detektor in Form eines magnetischen Untergrunddetektors auf, nach der US5829147 in Form eines Photosensorarrays, wobei mittels der Markiervorrichtung automatisch gesteuert über Ventile, die mit einem Rechenmittel verbunden sind, abhängig von der Position des detektierten Objekts, eine oder mehrere Düsen eine farbige Markierung auf die Fläche aufspritzen. Dazu sind die steuerbaren Düsen mit einem unter Eigendruck stehenden Farbstoffreservoir in Form eines Tanks verbunden.

Zudem ist nach der DE29707868U eine Vorrichtung zum Luftstrahl-Farbspritzen (auch Airbrushing genannt) bekannt, bei welcher einer Druckluftdüse im Winkel von 70° zum Luftstrom eine (durch Kapillare) poröse Schreibspitze eines eingeklemmten Filz-Schreibstiftes mit farbiger Markierflüssigkeit in seinem Markierflüssigkeitsreservoir zugeordnet ist.

Die Aufgabe der Erfindung besteht in einer weiteren Optimierung der Markiervorrichtung, wobei insbesondere eine robuste Ausführung und ein baustellentaugliches Verfahren notwendig ist. Insbesondere muss eine Markierung auf allen gängigen glatten oder rauhen Flächen bei allen räumlichen Orientierungen mit bis zu 20 Markierungen pro Sekunde in einem Temperaturbereich von -10°C bis +50°C möglich sein und diese Markierung eine gute Sichtbarkeit und hohen Kontrast aufweisen. Zudem sollte die Markiervorrichtung selbst wartungsfrei sein bis auf einen einfachen und intuitiven Ersatz der verbrauchten Markierflüssigkeit. Ein weiterer Aspekt besteht in einem einfachen Wechsel der Farbe der Markierflüssigkeit.

Die Aufgabe wird im Wesentlichen durch die Merkmale des Anspruchs 1 gelöst. Vorteilhafte Weiterbildungen ergeben sich aus den Unteransprüchen.

So weist eine an einer Fläche entlang versetzbare Markiereinrichtung eine Markiervorrichtung zur Aufbringung einer Markierflüssigkeit aus einem Markierflüssigkeitsreservoir auf die Fläche auf, die zumindest ein von einem Rechenmittel steuerbares (Pneumatik-)Ventil und eine damit verbundene Düse enthält, wobei das Markierflüssigkeitsreservoir ein in einem Stifthalter einsetzbarer Schreibstift mit einer porösen Schreibspitze ist, der die Düse benachbart zugeordnet ist, die über das Ventil mit einem gasförmigen Druckmedium verbunden ist.

Durch die Ausbildung der Markiervorrichtung zum (Luft)strahl-Farbspritzen mit porösen Schreibspitzen handelsüblicher und weltweit verfügbarer und bewährter Schreibstifte (insb. Marker) ist die Markiereinrichtung noch robuster und baustellentauglicher ausgebildet. Zudem können in einfachster Weise die Schreibstifte gewechselt und so die Markiereinrichtung auch mit unterschiedlichen Markierflüssigkeiten bezüglich Farben, Lösungsmittel, Abwaschbarkeit etc. verwendet werden, wobei die Schreibstifte stets weiterverwendbar sowie üblicherweise als solche ökonomisch nachfüllbar sind.

Vorteilhaft weist die Markiereinrichtung einen positionsabhängigen Detektor auf, der mit dem Rechenmittel verbunden ist, wodurch auf ein Detektionsereignis hin eine automatische Markierung erfolgen kann.

Vorteilhaft bildet die Düsenachse mit der Stiftachse einen Sprühwinkel im Bereich von 70° bis 82° aus, was sich experimentell als optimal zum Gasstrahl-Farbspritzen mit porösen Schreibspitzen herausstellt.

Vorteilhaft ist die Stiftachse zur Oberfläche mit einem Neigungswinkel im Bereich von ??? bis ??? geneigt, wodurch der von der Schreibspitze abgelenkte Gasstrahl senkrecht auf die Fläche auftrifft und somit eine exakte Positionierung möglich ist.

Vorteilhaft liegt der Abstand der porösen Schreibspitze von der Fläche im Bereich von 3 mm bis 30 mm, optimal bei 5 mm, wodurch eine im Baugewerbe geeignete Markierungsgrösse mit gutem Kontrast und hinreichender Genauigkeit erfolgt.

Vorteilhaft schneidet die Düsenachse die poröse Schreibspitze zentrisch, wodurch der Luftstrom keine Querablenkung erfährt.

Vorteilhaft liegt der Düsendurchmesser der Düse zwischen 1.0 und 2.0 mm, der verwendete Gasdruck druckseitig vor dem Ventil zwischen 0.8 und 2.5 bar, wodurch der Gasstrahl für die Kapillarwirkung an der porösen Schreibspitze optimiert ist.

Vorteilhaft ist das druckseitige Ende des Ventils über ein Reduzierventil mit einem Druckreservoir verbunden, weiter vorteilhaft mit einer Druckgasflasche, wodurch mit einer kleinen und leichten handelsüblichen Druckgasflasche (bspw. mit 250 bar) der notwendige Gasdruck am druckseitigen Ende des Ventils einfach sowie ohne bewegliche Teile (bspw. bei der ebenfalls möglichen Druckerzeugung durch eine Pumpe) für eine lange Nutzungsdauer bereitgestellt ist.

Vorteilhaft ist das Druckmedium normale Druckluft, wodurch die übliche Luftzusammensetzung auch in geschlossenen Räumen unverändert bleibt, obwohl auch andere Druckmedien wie Sauerstoff, Stickstoff, Kohlendioxid, Propan etc. prinzipiell nutzbar sind.

Vorteilhaft sind in der Markiervorrichtung mehrere, parallel zueinander versetzte Düsen mit verbundenen Ventilen und zugeordneten Stifthaltern vorhanden, in welche Schreibstifte einsetzbar sind, wodurch bei einer Versetzung der Markiereinrichtung mehrere (versetzte) Markierungen gleichzeitig aufbringbar sind, bspw. bei Untergrundscannern. Zudem können (gleichpositionierte) Markierungen steuerungs- oder ereignisabhängig wahlweise mit unterschiedlicher Markierflüssigkeit erstellt werden, ohne dass der Schreibstift gewechselt werden muss, bspw. bei aktiven Laserdetektoren.

Die Erfindung wird bezüglich eines vorteilhaften Ausführungsbeispiels näher erläutert mit:
Fig. 1 als Markiereinrichtung
Fig. 2 als Markiervorrichtung der Markiereinrichtung nach Fig. 1

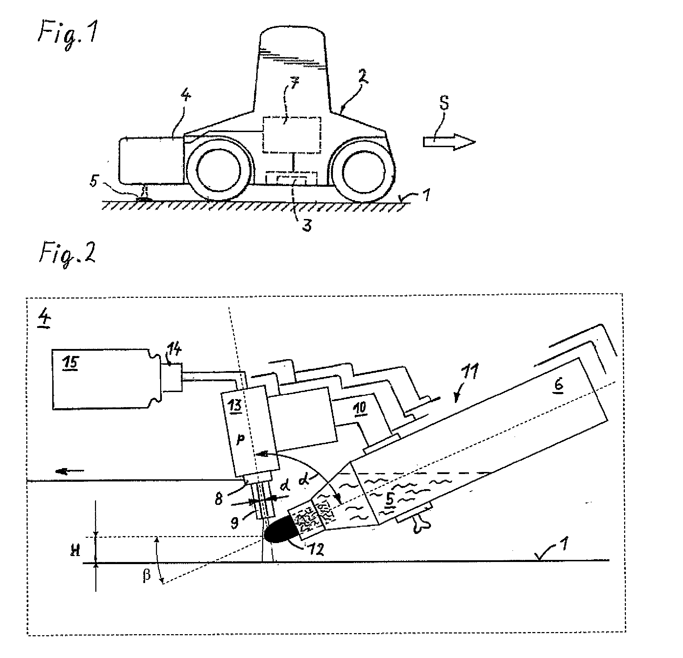

Nach Fig. 1 weist eine handgeführt an einer Fläche 1 entlang einer Scannrichtung S verfahrbare Markiereinrichtung 2 in Form eines Untergrunddetektors einen positionsabhängigen Detektor 3 in Form eines Ultrawideband(UWB)-Untergrundradars, das mit einem Rechenmittel verbunden ist sowie eine von dem Rechenmittel 7 gesteuerte Markiervorrichtung 4 zur Aufbringung einer Markierflüssigkeit 5 auf die Fläche 1 auf.

Nach Fig. 2 ist bei der Markiervorrichtung 4 zur Aufbringung einer Markierflüssigkeit 5 aus einem Markierflüssigkeitsreservoir 6 auf die Fläche 1 das Markierflüssigkeitsreservoir 6 ein in einem Stifthalter 10 eingesetzter Schreibstift 11 in Form eines handelsüblichen Markers mit einer porösen Schreibspitze 12 aus Filz, der die Düse 9 mit einem Düsendurchmesser d von 1,5 mm benachbart zugeordnet ist, die über das vom Rechenmittel 7 (Fig. 1) gesteuerte Ventil 8 in Form eines Pneumatikventils mit einem gasförmigen Druckmedium 13 in Form von Druckluft bei einem Gasdruck p von 1,5 bar verbunden ist. Das druckseitige Ende des Ventils 8 ist über ein Reduzierventil 14 mit einem Druckreservoir 15 in Form einer handelsüblichen Druckluftflasche mit 250 bar Innendruck verbunden. Dabei bildet die Düsenachse D mit der Stiftachse A einen Sprühwinkel [alpha] von 75° aus, wobei die Stiftachse A selbst zur Oberfläche in einem Neigungswinkel [beta] von 30° geneigt ist. Der Abstand H der porösen Schreibspitze 12 von der Fläche 1 beträgt 5 mm. Die Düsenachse D schneidet die poröse Schreibspitze 12 zentrisch. Dabei sind in der Markiervorrichtung 4 mehrere (nur angedeutet), parallel zueinander versetzte Düsen 9 mit verbundenen Ventilen 8 und zugeordneten Stifthaltern 10 vorhanden, in welche Schreibstifte 11 eingesetzt sind.

## Patentansprüche

1. Eine an einer Fläche (1) entlang versetzbare Markiereinrichtung mit einer Markiervorrichtung (4) zur Aufbringung einer Markierflüssigkeit (5) aus einem Markierflüssigkeitsreservoir (6) auf die Fläche (1), die zumindest ein von einem Rechenmittel (7) steuerbares Ventil (8) und eine damit verbundene Düse (9) mit einer Düsenachse (D) enthält, **dadurch gekennzeichnet, dass** das Markierflüssigkeitsreservoir (6) ein in einem Stifthalter (10) einsetzbarer Schreibstift (11) mit einer Stiftachse (A) und mit einer porösen Schreibspitze (12) ist, der die Düse (9) benachbart zugeordnet ist, die über das Ventil (8) mit einem gasförmigen Druckmedium (13) verbunden ist.

2. Markiereinrichtung nach Anspruch 1, **dadurch gekennzeichnet, dass** die Markiereinrichtung (4) einen positionsabhängigen Detektor (3) aufweist, der mit dem Rechenmittel (7) verbunden ist.

3. Markiereinrichtung nach Anspruch 1 oder 2, **dadurch gekennzeichnet, dass** die Düsenachse (D) mit der Stiftachse (A) einen Sprühwinkel ([alpha]) im Bereich von 70° bis 82° ausbildet.

4. Markiereinrichtung nach einem der Ansprüche 1 bis 3, **dadurch gekennzeichnet, dass** die Stiftachse ([A]) zur Oberfläche (1) mit einem Neigungswinkel ([beta]) im Bereich von ??? bis ??? geneigt ist.

5. Markiereinrichtung nach einem der Ansprüche 1 bis 4, **dadurch gekennzeichnet, dass** der Abstand (H) der porösen Schreibspitze (12) von der Fläche (1) im Bereich von 3 mm bis 30 mm liegt.

6. Markiereinrichtung nach einem der Ansprüche 1 bis 5, **dadurch gekennzeichnet, dass** die Düsenachse (D) die poröse Schreibspitze (12) zentrisch schneidet.

7. Markiereinrichtung nach einem der Ansprüche 1 bis 6, **dadurch gekennzeichnet, dass** der Düsendurchmesser der Düse (9) zwischen 1.0 und 2.0 mm und der verwendete Gasdruck (p) druckseitig vor dem Ventil (8) zwischen 0.8 und 2.5 bar liegt.

8. Markiereinrichtung nach einem der Ansprüche 1 bis 7, **dadurch gekennzeichnet, dass** das druckseitige Ende des Ventils (8) über ein Reduzierventil (14) mit einem Druckreservoir (15) verbunden ist.

9. Markiereinrichtung nach einem der Ansprüche 1 bis 8, **dadurch gekennzeichnet, dass** das Druckmedium (13) Druckluft ist.

10. Markiereinrichtung nach einem der Ansprüche 1 bis 8, **dadurch gekennzeichnet, dass** in der Markiervorrichtung (4) mehrere, parallel zueinander versetzte Düsen (9) mit verbundenen Ventilen (8) und zugeordneten Stifthaltern (10) vorhanden sind, in welche Schreibstifte (11) einsetzbar sind.
